# EUROPÄISCHE PATENTSCHRIFT

(11) **EP 1 118 517 B1**
(45) Veröffentlichungstag und Bekanntmachung des Hinweises auf die Patenterteilung: **16.03.2011**
(21) Anmeldenummer: 99126202.3
(22) Anmeldetag: 30.12.1999
(51) Int. Cl.: B60T 8/175

(54) **Fahrzeugbremsanlage**
Vehicle brake system
Système de freinage de véhicule

(43) Veröffentlichungstag der Anmeldung: 25.07.2001
(73) Patentinhaber: ROBERT BOSCH GMBH, 70469 Stuttgart (DE)
(72) Erfinder: Jingsheng, Yu, 71636 Ludwigsburg (DE)

(56) Entgegenhaltungen:
- DE-A- 19 816 290
- US-A- 4 762 196
- US-A- 5 551 770

## Beschreibung

Die Erfindung betrifft eine Fahrzeugbremsanlage zum Abbremsen zumindest eines Rades eines Fahrzeugs durch Erzeugung einer Bremskraft, die mittels eines Bremsdrucks einstellbar ist, wobei die Fahrzeugbremsanlage einen Regler zur Erzeugung einer Stellgröße zur Einstellung eines Bremsventils aufweist, mittels dessen der Bremsdruck einstellbar ist. Die Erfindung betrifft ferner ein Verfahren zum Betrieb einer solchen Fahrzeugsbremsanlage.

Eine derartige Fahrzeugbremsanlage z.B. in der DE 196 54 427 A1 offenbart.

Ferner ist aus der DE 196 52 978 A1 eine Fahrzeugbremsanlage zum Abbremsen zumindest eines Rades eines Fahrzeugs durch Erzeugung einer Bremskraft bekannt, wobei die Bremskraft mittels eines Bremsdrucks einstellbar ist, der durch Stellung eines Bremsventils einstellbar ist.

Aus der DE 196 24 794 A1 ist ein Verfahren zur Regelung des vom Hauptbremszylinder bereitgestellten Drucks bekannt. Diese Druckregelung hat keinen Einfluss auf die Regelung des an den Radbremsen anliegenden Drucks zur Verhinderung des Blockierens oder des Durchdrehens der Räder.

Aus der DE 198 16 290 A1 ist ein Verfahren zur Regelung des Bremsdrucks bekannt, bei dem die Bremskreise zeitgleich mit dem Beginn der Blockierschutzregelung vom Hauptbremszylinder, abgekoppelt werden, in die Radbremszylinder wird aus einem Niederdruckspeicher mit Hilfe einer Hydraulikpumpe Druckmittel gefördert. Durch die Abkopplung der Bremskreise wird ein rascherer Druckaufbau während der Blockierschutzregelung erreicht.

Es ist Aufgabe der Erfindung, oben bezeichnete Fahrzeugbremsanlagen zu verbessern. Es ist wünschenswert, den Bremsdruck möglichst schnell einzustellen und Geräusche durch eine Fahrzeugbremsanlage, insbesondere beim Einsatz von ABS (Anti-Blockiersystem), ASR (Anti-Schlumpfregelung) und FDR (Fahrdynamikregelung), zu vermindern. Einzelheiten zu ABS, ASR und FDR können dem Artikel "FDR - die Fahrdynamikreglung von Bosch", von A. van Zanten, R. Erhardt und G. Pfaff, ATZ Automobiltechnische Zeitschrift 96 (1994) 11 Seiten 674 bis 689 entnommen werden.

Die Aufgabe wird durch eine Fahrzeugbremsanlage zum Abbremsen zumindest eines Rades eines Fahrzeugs durch Erzeugung einer Bremskraft, die mittels eines Bremsdrucks einstellbar ist, gelöst, wobei die Fahrzeugbremsanlage einen Regler zur Erzeugung einer Stellgröße zur Einstellung eines Bremsventils aufweist, mittels dessen der Bremsdruck einstellbar ist, wobei die Fahrzeugbremsanlage einen Begrenzer zur Begrenzung der Stellgröße aufweist, dessen Ausgang auf den Eingang des Reglers rückgekoppelt ist. Auf dieser Weise ist es möglich, den gewünschten Bremsdruck schneller aufzubauen, als dies bei einer Fahrzeugsbremsanlage gemäß der DE 196 52 978 A1 möglich ist. Zudem wird die Geräuschbildung in der Fahrzeugbremsanlage gegenüber den bekannten Fahrzeugbremsanlagen verringert. Dies gilt insbesondere beim Einsatz vom ABS, ASR und FDR.

In besonders vorteilhafter Ausgestaltung der Erfindung weist der Regler einen I-Anteil (Integrator) auf, wobei der Regler vorteilhafterweise als PID Regler ausgeführt ist. Die Verwendung eines I-Anteils, z.B. eines PID Reglers, führt zu einem besonders schnellen Aufbau des gewünschten Bremsdrucks. Das Zusammenwirken des Begrenzers mit einem Regler, der einen I-Anteil aufweist, führt zu einer besonders vorteilhaften Fahrzeugsbremsanlage. Zudem wird die Geräuschbildung in der Fahrzeugbremsanlage gegenüber den bekannten Fahrzeugbremsanlagen verringert.

In vorteilhafter Ausgestaltung der Erfindung begrenzt der Begrenzer die Stellgröße auf einen Bereich, in dem der Zusammenhang zwischen der Stellgröße und dem durch das Bremsventil eingestellten Bremsdruck im wesentlichen linear ist. Auf diese Weise wird die Regelung des Bremsdrucks vereinfacht.

In besonders vorteilhafter Ausgestaltung der Erfindung erfolgt die Rückkopplung mittels eines inversen Reglers.

Die Stellgröße ist in besonders vorteilhafter Ausgestaltung der Erfindung ein pulsweiten-moduliertes (PWM) Signal.

Die Erfindung kommt in besonders vorteilhafterweise in hydraulischen Fahrzeugbremsanlagen zum Einsatz, wie sie z.B. in der DE 196 52 978 A1, in der DE 195 01 760 A1 oder in dem Buch "Automotive Handbook", Bosch, 4. (englische) Auflage, z.B. Seite 633, offenbart sind.

Weitere Vorteile und Einzelheiten ergeben sich aus der nachfolgenden Beschreibung von Ausführungsbeispielen. Im einzelnen zeigen:
- Fig. 1: eine Fahrzeugbremsanlage;Figur 2 den Einsatz eines Reglers zur Bildung eines pulsweiten-moduliertes Signals;
- Fig. 3: den Einsatz eines Begrenzers;
- Fig. 4: ein besonders vorteilhaftes Ausführungsbeispiel;
- Fig. 5: ein alternatives besonders vorteilhaftes Ausführungsbeispiel;
- Fig. 6: einen Verlauf des Bremsdrucks über die Zeit;
- Fig. 7: einen Bremsdruck-Schätzer zum Schätzen des Ist- Bremsdrucks;
- Fig. 8: die Einbindung eines Bremsdruck-Schätzers.

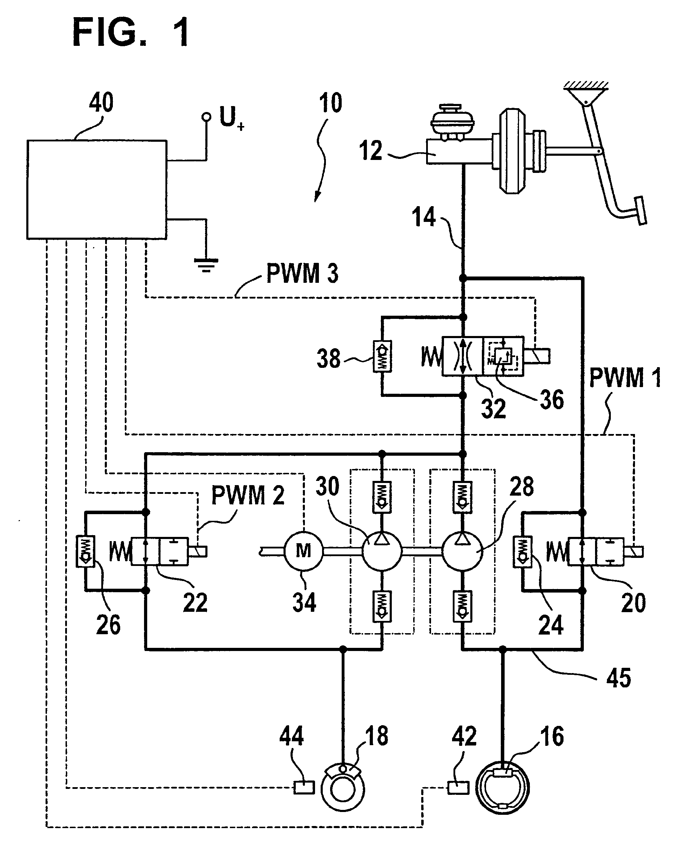

In Fig. 1 ist beispielhaft ein Bremskreis einer insgesamt mit 10 bezeichneten Fahrzeugbremsanlage dargestellt, die eine gegenüber der in der DE 196 52 978 A1 offenbarten Fahrzeugbremsanlage veränderte Fahrzeugbremsanlage ist. Der Bremskreis ist an einen Hauptbremszylinder 12 angeschlossen. Die dargestellte Fahrzeugbremsanlage 10 hat eine X-Bremsenaufteilung, d.h. es sind ein vorderes, Fahrzeugrad und ein diagonal gegenüberliegendes hinteres Fahrzeugrad an einen Bremskreis angeschlossen. An den dargestellten Bremskreis sind die linke Vorder- und die rechte Hinterradbremse angeschlossen. Der zweite Bremskreislauf, an den die rechte Vorder- und die linke Hinterradbremse angeschlossen sind, ist nicht dargestellt. Es sei angenommen, daß die Vorderräder die angetriebenen Fahrzeugräder seien. Die Erfindung ist selbstverständlich auch für anders gestaltete Bremskreisläufe sowie für Fahrzeuge, bei denen die Hinterräder angetrieben werden, oder für mit Vierradantrieb angetriebene Fahrzeuge einsetzbar.

Der Bremskreis der Fahrzeugbremsanlage 10 ist mit einer Bremsleitung 14 an jeweils eine Druckkammer des Hauptbremszylinders 12 angeschlossen. Die Bremsleitung 14 verzweigt sich zu einem Radbremszylinder 16 eines nicht angetriebenen hinteren Fahrzeugrades und zu einem Radbremszylinder 18 eines angetriebenen vorderen Fahrzeugrades. Jedem Radbremszylinder 16, 18 ist ein Radbremsventil 20, 22 vorgeschaltet. Die Radbremsventile 20, 22 sind in ihrer Grundstellung geöffnete Magnetventile. Ihnen ist je ein in Richtung vom Radbremszylinder 16, 18 zum Hauptbremszylinder 12 durchströmbares Rückschlagventil 24, 26 parallel geschaltet. Die Radbremsventile 20 und 22 sind im vorliegenden Ausführungsbeispiel Radbremsventile, die über ein pulsweiten-moduliertes (PWM) Signal einstellbar sind. Die pulsweiten-modulierten Signale zur Einstellung der Radbremsventile 20 und 22 sind in Fig. 1 mit dem Bezugszeichen PWM1 und PWM2 bezeichnet.

Die Radbremszylinder 16, 18 sind an Saugseiten zweier Rückförderpumpen 28, 30 angeschlossen, deren Druckseiten miteinander verbunden und über ein Umschaltventil 32 an den Hauptbremszylinder 12 angeschlossen sind. Das Umschaltventil 32 ist ebenfalls ein in seiner Grundstellung offenes Magnetventil. Die beiden Rückförderpumpen 28, 30 sind mit einem Pumpenmotor 34 antreibbar.

In das Umschaltventil 32 ist ein Druckbegrenzungsventil 36 integriert, das in der geschlossenen Schaltstellung des Umschaltventils 32 wirksam ist und die Druckdifferenz zwischen Radbremszylinderseite und Hauptbremszylinderseite auf einen vorgegebenen Wert begrenzt. Das integrierte Druckbegrenzungsventil 36 wirkt wie ein dem Umschaltventil 32 parallel geschaltetes separates Druckbegrenzungsventil. Dem Umschaltventil 32 ist ein in Richtung vom Hauptbremszylinder 12 zu den Radbremszylindern 16, 18 durchströmbares Rückschlagventil 38 parallel geschaltet.

Die Fahrzeugbremsanlage 10 weist ein elektronisches Steuergerät 40 auf, das Signale von Raddrehsensoren 42, 44 erhält und das den Pumpenmotor 34, die Radbremsventile 20, 22 und das Umschaltventil 32 ansteuert. Zur Ansteuerung der Radbremsventile 20 und 22 sowie des Umschaltventils 32 erzeugt das elektronische Steuergerät 40 die pulsweiten- modulierten Signale PWM1 und PWM2 sowie PWM3.

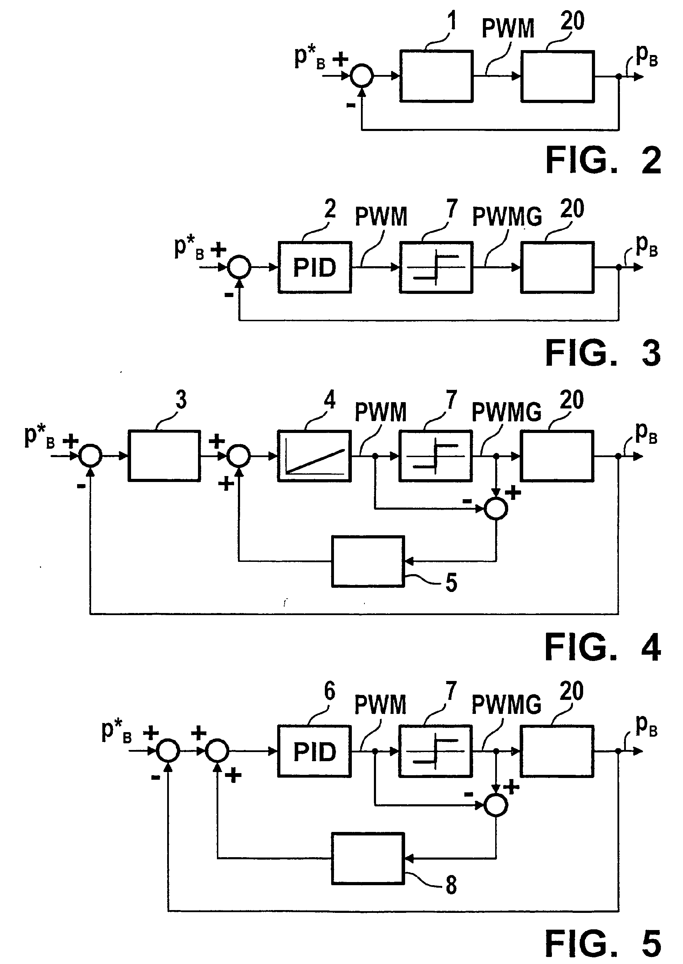

Fig. 2 zeigt den Einsatz eines Reglers 1 zur Erzeugung eines pulsweiten-modulierten Signals PWM zur Steuerung des Radbremsventils 20. Dabei entspricht das pulsweiten-modulierte Signal PWM in Fig. 2 dem pulsweiten-modulierten Signal PWM1 in Fig. 1. Das Radbremsventil 22 und das Umschaltventil 32 in Fig. 1 werden in vergleichbarer Weise angesteuert. Während gemäß dem aus der DE 196 52 978 A1 bekannten Verfahren ein pulsweitenmoduliertes Signal direkt, d.h. ohne einen Regler gebildet wird, ist vorgesehen einen Regler 1 zur Erzeugung des pulsweiten-modulierten Signals PWM einzusetzen. Der Regler 1 wird vorteilhafterweise auf dem Steuergerät 40 in Fig. 1 implementiert. Der Regler 1 bildet das pulsweiten-modulierte Signal PWM aus der Differenz zwischen dem Soll-Bremsdruck pB* in der Bremsleitung 45 in Fig. 1 und dem tatsächlichen Ist-Bremsdruck pB in der Bremsleitung 45 in Fig. 1.

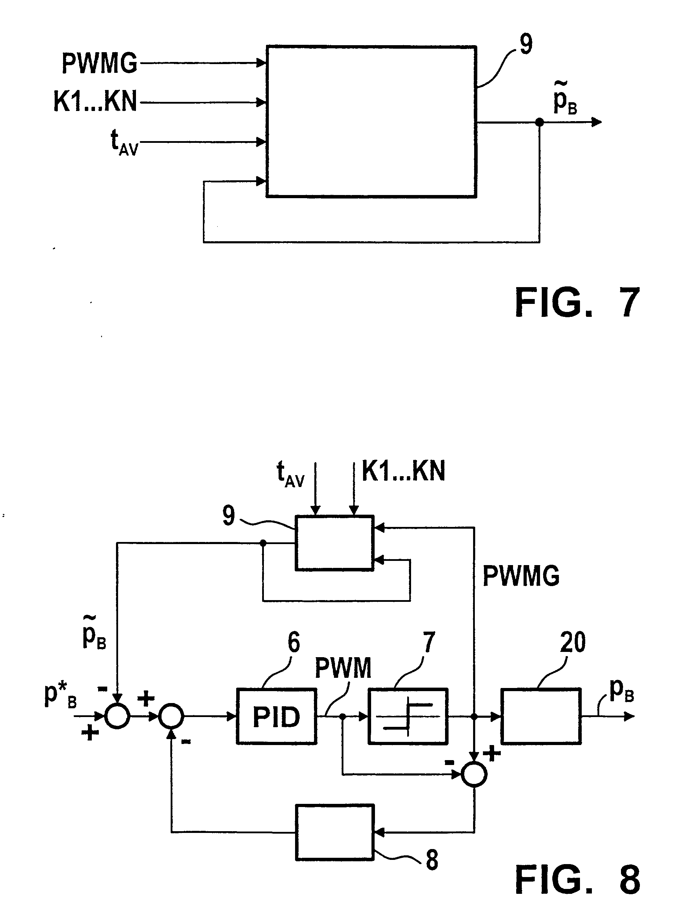

In vorteilhafter Ausgestaltung ist (wie auch in den Ausführungsbeispielen gemäß Fig. 3, Fig. 4, Fig. 5) vorgesehen den Ist-Bremsdruck pB in der Bremsleitung des Fahrzeugs nicht direkt zu messen, sondern mittels eines Modells zu schätzen. Dazu wird der Zusammenhang zwischen dem pulsweiten-modulierten Signal PWM und dem Bremsdruck pB durch ein PT2-System oder ein PT1-System modelliert. Diese alternative modellgestützte Ermittlung des Ist-Bremsdrucks pB ist in den Prinzipblockschaltbildern in Fig. 1 bis 5 aus Gründen der Übersichtlichkeit nicht dargestellt. Die Schätzung des Ist-Bremsdrucks pB in der Bremsleitung 45 des Fahrzeugs mittels eines Modells ist in Fig. 7 und Fig. 8 näher erläutert.

Fig. 3 zeigt den Einsatz eines Begrenzers 7. Dazu ist zwischen einem Regler 2, der in beispielhafter Ausgestaltung als PID-Regler ausgeführt ist, und dem Radbremsventil 20 ein Begrenzer 7 vorgesehen. Der Begrenzer 7 begrenzt das vom Regler 2 ausgegebene pulsweiten- modulierte Signal PWM und gibt ein begrenztes pulsweiten-moduliertes Signal PWMG aus. Das begrenzte pulsweiten-modulierte Signal PWMG in Fig. 3 entspricht dem pulsweiten-modulierten Signal PWM1 (bzw. PWM2 und PWM3) in Fig. 1. Die pulsweiten-modulierten Signale PWM1, PWM2 und PWM3 in Fig. 1, PWM in Fig. 2 und PWMG in Fig. 3, 4, 5 und 8 entsprechen der Stellgröße in den Ansprüchen.

Fig. 4 zeigt ein Ausführungsbeispiel der Erfindung. Dabei ist der Ausgang des Begrenzers auf den Eingang eines Reglers 4 rückgekoppelt. Die Rückkopplung erfolgt dabei in besonders vorteilhafter Ausgestaltung durch Rückkopplung der Differenz der Ausgangsgröße PWMG des Begrenzers 7 und seiner Eingangsgröße PWM. Die Rückkopplung erfolgt zudem in besonders vorteilhafter Ausgestaltung über einen Differenzierer 5. Der Regler 4 ist in beispielhafter Ausgestaltung als Integrator ausgeführt. Ferner ist ein weiterer Regler 3 vorgesehen. Die Regler 3 und 4 können auch als ein Regler und der Regler 4 als I-Anteil (Integrator) dieses Reglers interpretiert werden. Der Differenzierer 5 ist ein zu dem (I-)Regler 4 inverser Regler.

Ein zum Ausführungsbeispiel aus Fig. 4 alternatives Ausführungsbeispiel zeigt Fig. 5. Dabei ist der Ausgang des Begrenzers 7 mittels eines inversen Reglers 8 auf den Eingang eines Reglers 6 rückgekoppelt. Der inverse Regler 8 ist ein zu Regler 6 inverser Regler, d.h. der inverse Regler 8 hat eine Übertragungsfunktionen, die zu der Übertragungsfunktion des Reglers 6 invers ist. Die Rückkopplung erfolgt in besonders vorteilhafter Ausgestaltung durch Rückkopplung der Differenz der Ausgangsgröße PWMG des Begrenzers 7 und seiner Eingangsgröße PWM. Ein Regler 3 ist nicht vorgesehen. Der Regler 6 weist vorteilhafterweise einen I-Anteil (Integrator) auf und ist im vorliegenden Ausführungsbeispiel als PID-Regler ausgeführt.

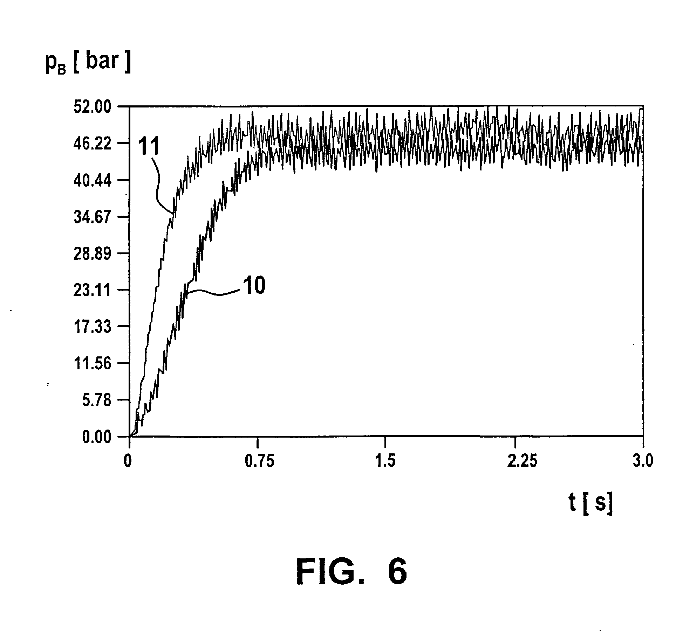

Fig. 6 zeigt einen Verlauf des Bremsdrucks pB in bar über die Zeit t in Sekunden. In Fig. 6 sind der Verlauf 10 des Bremsdrucks pB in einer Fahrzeugbremsanlage gemäß DE 196 52 978 A1 und der Verlauf 11 des Bremsdrucks pB in einer Fahrzeugbremsanlage gemäß Fig. 5 für einen gewünschten Bremsdrucksprung von 0 bar auf 50 bar gegenüber gestellt. Wie Fig. 6 zeigt, wird der Zielwert von 50 bar mittels der Fahrzeugbremsanlage gemäß Fig. 5 deutlich schneller erreicht als mit der bekannten Fahrzeugbremsanlage gemäß der DE 196 52 978 A1. Dabei schwingt der Bremsdruck der Fahrzeugbremsanlage gemäß Fig. 5 nicht über. Somit läßt sich der gewünschte Bremsdruck mittels einer Fahrzeugbremsanlage gemäß Fig. 5, insbesondere durch das Zusammenwirken des Reglers mit I-Anteil, des Begrenzers und des inversen Reglers, deutlich schneller und, wenn sich der gewünschte Bremsdruck schnell ändert, präziser einstellen, als dies mit den bekannten Fahrzeugbremsanlagen möglich ist.

Fig. 7 zeigt einen Bremsdruck-Schätzer 9 zum Schätzen des Ist-Bremsdrucks pB in einer Bremsleitung des Fahrzeugs. Der Bremsdruck-Schätzer 9 ermittelt einen Schätzwert pB des Ist-Bremsdrucks pB. Der Bremsdruck-Schätzer 9 weist im vorliegenden Ausführungsbeispiel ein PT2-System oder ein PT1-System auf, mittels dessen der Zusammenhang zwischen dem pulsweitenmodulierten Signal PWM (für den Einsatz des Bremsdruck-Schätzers 9 in Verbindung mit dem Ausführungsbeispiel gemäß Fig. 3) bzw. PWMG (für den Einsatz des Bremsdruck-Schätzers 9 in Verbindung mit dem Ausführungsbeispielen gemäß Fig. 4 und 5) und dem Bremsdruck pB modelliert wird. Eingangsgrößen des Bremsdruck-Schätzers 9 sind neben dem Schätzwert 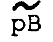 des Ist-Bremsdrucks PB und dem pulsweiten-modulierten Signal PWM (für den Einsatz des Bremsdruck-Schätzers 9 in Verbindung mit dem Ausführungsbeispiel gemäß Fig. 3) bzw. PWMG (für den Einsatz des Bremsdruck-Schätzers 9 in Verbindung mit dem Ausführungsbeispielen gemäß Fig. 4 und 5) die Parameter K1 bis KN des dem Bremsdruck-Schätzer 9 zugrunde liegenden Modells, also im vorliegenden Ausführungsbeispiel des PT2-Systems bzw. PT1-Systems, sowie ggf. die aktuelle Schaltstellung t_{AV} eines Auslaßventils. Im Ausführungsbeispiel gemäß Fig. 1 ist kein Auslaßventil vorgesehen. Wird jedoch ein Auslaßventil vorgesehen, wie es z.B. in dem in dem Buch "Automotive Handbook", Bosch, 4. (englische) Auflage, Seite 633 offenbarten Bremskreislauf vorgesehen (vgl. outletvalve) ist, so ist dessen Schaltstellung t_{AV} vorteilhafterweise Eingangsgröße des Bremsdruck-Schätzers 9 und geht in die Ermittlung des Schätzwerts 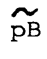 des Ist-Bremsdrucks pB ein.

Fig. 8 zeigt die Einbindung eines Bremsdruck-Schätzers 9 in das Ausführungsbeispiel gemäß Fig. 5. Dabei ist nicht der Ist-Bremsdruck pB Eingangsgröße in den Regler 6 sondern dessen Schätzwert 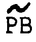 . Der Einsatz eines Bremsdruck-Schätzers 9 in die Ausführungsbeispiele gemäß Fig. 3 und Fig. 4 erfolgt entsprechend.

## Patentansprüche

1. Fahrzeugbremsanlage (10) zum Abbremsen zumindest eines Rades eines Fahrzeugs durch Erzeugung einer Bremskraft, die mittels eines Bremsdrucks (pB) einstellbar ist, wobei die Fahrzeugbremsanlage (10) einen Regler (2, 4, 6) zur Erzeugung einer Stellgröße (PWM, PWMG, PWM1, PWM2, PWM3) zur Einstellung eines Bremsventils (20, 22) aufweist, mittels dessen der Bremsdruck (pB) einstellbar ist,
**dadurch gekennzeichnet,**
**daß** die Fahrzeugbremsanlage (10) einen Begrenzer (7) zur Begrenzung der Stellgröße (PWM, PWMG, PWM1, PWM2, PWM3) aufweist, wobei der Ausgang des Begrenzers (7) auf den Eingang des Reglers (4,6) rückgekoppelt ist.

2. Fahrzeugbremsanlage (10) nach Anspruch 1,
**dadurch gekennzeichnet,**
**daß** der Regler (2, 4, 6) die Stellgröße (PWM, PWMG, PWM1, PWM2, PWM3) in Abhängigkeit der Differenz zwischen dem gewünschten Soll- Bremsdruck (ps) und dem Ist-Bremsdruck (pB) einstellend ausgebildet ist.

3. Fahrzeugbremsanlage (10) nach Anspruch 1 oder 2,
**dadurch gekennzeichnet,**
**daß** der Regler (2, 4, 6) einen Integrator aufweist.

4. Fahrzeugbremsanlage nach Anspruch 3,
**dadurch gekennzeichnet,**
**daß** der Regler (2, 6) ein PID-Regler ist.

5. Fahrzeugbremsanlage (10) nach einem der vorhergehenden Ansprüche,
**dadurch gekennzeichnet,**
**daß** der Begrenzer (7) die Stellgröße (PWM, PWMG, PWM1, PWM2, PWM3) auf einem Bereich begrenzt, in dem der Zusammenhang zwischen der Stellgröße (PWM, PWMG, PWM1, PWM2, PWM3) und dem durch das Bremsventil (20, 22) eingestellten Bremsdruck (PB) im wesentlichen linear ist.

6. Fahrzeugbremsanlage (10) nach einem der vorhergehenden Ansprüche,
**dadurch gekennzeichnet,**
**daß** die Stellgröße ein pulsweiten-moduliertes Signal (PWM, PWMG, PWM1, PWM2, PWM3) ist.

7. Fahrzeugbremsanlage (10) nach Anspruch 6,
**dadurch gekennzeichnet,**
**daß** der Begrenzer (7) das pulsweiten-modulierte Signal (PWM, PWMG, PWM1, PWM2, PWM3) auf einem Bereich begrenzt, in dem der Zusammenhang zwischen dem Strom des pulsweiten-modulierten Signals (PWM, PWMG, PWM1, PWM2, PWM3) und dem durch das Bremsventil (20, 22) eingestellten Bremsdruck (pB) im wesentlichen linear ist.

8. Fahrzeugbremsanlage (10) nach einem der vorhergehenden Ansprüche,
**dadurch gekennzeichnet,**
**daß** der Ausgang des Begrenzers (7) auf den Eingang des Reglers (4,6) über einen inversen Regler (5, 8) rückgekoppelt ist.

9. Verfahren zum Betrieb einer Fahrzeugbremsanlage (10) nach einem der vorhergehendend Ansprüche zum Abbremsen zumindest eines Rades eines Fahrzeugs durch Erzeugung einer Bremskraft, die mittels eines Bremsdrucks (1B) eingestellt wird, wobei der Bremsdruck (pB) mittels einer Stellgröße (PWM, PWMG, PWM1, PWM2, PWM3) eingestellt wird,
**dadurch gekennzeichnet,**
**daß** die Stellgröße (PWM, PWMG, PWM1, PWM2, PWM3) begrenzt wird, indem der Ausgang des Begrenzers (7) auf den Eingang des Reglers (4,6) rückgekoppelt ist.

## Claims

1. Vehicle brake system (10) for braking at least one wheel of a vehicle by generating a braking force which can be adjusted by means of a braking pressure (pB), wherein the vehicle brake system (10) has a regulator (2, 4, 6) for generating a manipulated variable (PWM, PWMG, PWM1, PWM2, PWM3) for adjusting a brake valve (20, 22) by means of which the brake pressure (pB) can be adjusted,
**characterized**
**in that** the vehicle brake system (10) has a limiter (7) for limiting the manipulated variable (PWM, PWMG, PWM1, PWM2, PWM3), wherein the output of the limiter (7) is fed back to the input of the regulator (4, 6).

2. Vehicle brake system (10) according to Claim 1,
**characterized**
**in that** the regulator (2, 4, 6) is designed to adjust the manipulated variable (PWM, PWMG, PWM1, PWM2, PWM3) as a function of the difference between the desired setpoint brake pressure (ps) and the actual brake pressure (pB).

3. Vehicle brake system (10) according to Claim 1 or 2,
**characterized**
**in that** the regulator (2, 4, 6) has an integrator.

4. Vehicle brake system according to Claim 3,
**characterized**
**in that** the regulator (2, 6) is a PID regulator.

5. Vehicle brake system (10) according to one of the preceding claims,
**characterized**
**in that** the limiter (7) limits the manipulated variable (PWM, PWMG, PWM1, PWM2, PWM3) to a range in which the relationship between the manipulated variable (PWM, PWMG, PWM1, PWM2, PWM3) and the brake pressure (PB) which is adjusted by the brake valve (20, 22) is essentially linear.

6. Vehicle brake system (10) according to one of the preceding claims,
**characterized**
**in that** the manipulated variable is a pulse-width-modulated signal (PWM, PWMG, PWM1, PWM2, PWM3).

7. Vehicle brake system (10) according to Claim 6,
**characterized**
**in that** the limiter (7) limits the pulse-width-modulated signal (PWM, PWMG, PWM1, PWM2, PWM3) to a range in which the relationship between the current of the pulse-width-modulated signal (PWM, PWMG, PWM1, PWM2, PWM3) and the brake pressure (pB) which is adjusted by means of the brake valve (20, 22) is essentially linear.

8. Vehicle brake system (10) according to one of the preceding claims,
**characterized**
**in that** the output of the limiter (7) is fed back to the input of the regulator (4, 6) via an inverse regulator (5, 8).

9. Method for operating a vehicle brake system (10) according to one of the preceding claims for braking at least one wheel of a vehicle by generating a braking force which is adjusted by means of a brake pressure (1B), wherein the brake pressure (pB) is adjusted by means of a manipulated variable (PWM, PWMG, PWM1, PWM2, PWM3),
**characterized**
**in that** the manipulated variable (PWM, PWMG, PWM1, PWM2, PWM3) is limited by virtue of the fact that the output of the limiter (7) is fed back to the input of the regulator (4, 6).

## Revendications

1. Installation (10) de freinage de véhicule, destinée à freiner au moins une roue d'un véhicule en délivrant une force de freinage qui peut être réglée au moyen d'une pression de freinage (pB), l'installation (10) de freinage de véhicule présentant un régulateur (2, 4, 6) qui forme une grandeur de réglage (PWM, PWMG, PWM1, PWM2, PWM3) qui règle une soupape de frein (20, 22) au moyen de laquelle la pression de freinage (pB) peut être ajustée,
**caractérisée en ce que**
l'installation (10) de freinage de véhicule présente un limiteur (7) qui limite la grandeur de réglage (PWM, PWMG, PWM1, PWM2, PWM3), la sortie du limiteur (7) rétroagissant sur l'entrée du régulateur (4, 6).

2. Installation (10) de freinage de véhicule selon la revendication 1, **caractérisée en ce que** le régulateur (2, 4, 6) est configuré pour régler les grandeurs de réglage (PWM, PWMG, PWM1, PWM2, PWM3) en fonction de la pression de freinage de consigne (ps) souhaitée et la pression effective de freinage (pB).

3. Installation (10) de freinage de véhicule selon les revendications 1 ou 2, **caractérisée en ce que** le régulateur (2, 4, 6) présente un intégrateur.

4. Installation de freinage de véhicule selon la revendication 3, **caractérisée en ce que** le régulateur (2, 6) est un régulateur PID.

5. Installation (10) de freinage de véhicule selon l'une des revendications précédentes, **caractérisée en ce que** le limiteur (7) limite la grandeur de réglage (PWM, PWMG, PWM1, PWM2, PWM3) dans une plage dans laquelle la relation entre la grandeur de réglage (PWM, PWMG, PWM1, PWM2, PWM3) et la pression de freinage (PB) réglée par l'intermédiaire de la soupape de frein (20, 22) est essentiellement linéaire.

6. Installation (10) de freinage de véhicule selon l'une des revendications précédentes, **caractérisée en ce que** la grandeur de réglage est un signal (PWM, PWMG, PWM1, PWM2, PWM3) en impulsions à largeur modulée.

7. Installation (10) de freinage de véhicule selon la revendication 6, **caractérisée en ce que** le limiteur (7) limite le signal (PWM, PWMG, PWM1, PWM2, PWM3) en impulsions modulées en largeur dans une plage dans laquelle la relation entre la grandeur de réglage (PWM, PWMG, PWM1, PWM2, PWM3) et la pression de freinage (pB) réglée par l'intermédiaire de la soupape de frein (20, 22) est essentiellement linéaire.

8. Installation (10) de freinage de véhicule selon l'une des revendications précédentes, **caractérisée en ce que** la sortie du limiteur (7) rétroagit sur l'entrée du régulateur (4, 6) par l'intermédiaire d'un régulateur inverse (5, 8).

9. Procédé de gestion d'une installation (10) de freinage de véhicule selon l'une des revendications précédentes, destinée à freiner au moins une roue d'un véhicule en délivrant une force de freinage réglée au moyen d'une pression de freinage (1B), la pression de freinage (pB) étant réglée au moyen d'une grandeur de réglage (PWM, PWMG, PWM1, PWM2, PWM3),
**caractérisé en ce que**
la grandeur de réglage (PWM, PWMG, PWM1, PWM2, PWM3) est limitée par le fait que la sortie du limiteur (7) rétroagit sur l'entrée du régulateur (4, 6).
